# EUROPEAN PATENT APPLICATION

(11) **EP 2 466 085 A2**
(43) Date of publication of application: **20.06.2012**
(21) Application number: 10808319.7
(22) Date of filing: 08.08.2010
(51) Int. Cl.: F01N 3/037, F24F 3/16, F24F 5/00

(54) **CENTRIFUGAL, WET-TYPE AIR CLEANER**

(30) Priority: 14.08.2009 KR 20090075461
(71) Applicant: Yun, Jang-Shik, Busan 604-754 (KR)
(72) Inventor: Yun, Jang-Shik, Busan 604-754 (KR)
(74) Representative: Rupprecht, Kay
(86) International application number: PCT/KR2010/005190
(87) International publication number: WO 2011/019170

(57) **Abstract**

The present invention relates to a centrifugal, wet-type air cleaner with a centrifugal fan for generating vortex flow directly with the rotating torque of its blade, whereby pollutions can be eliminated centrifugally by creating a depressed pressure chamber (depressurized room) on the basis of the aqua viscosity of water mist. The centrifugal, wet-type air cleaner comprises: a centrifugal impeller for generating vortex flow with suction air and water; an annular vortex chamber installed inside the body of the air cleaner; a liquid tank for retaining washing water; a spray chamber for spraying the washing water; a water filter installed inside the liquid tank for recirculation of clean water, and a depressurized room installed in the body for controlling pressure in outlet air flow, wherein pollutions are removed centrifugally by the specific gravities of air and water. Fresh air is created with a natural anion, waterfall effect, and is suitable for hospitals, homes, farms, and the like.

## Description

### Technical Field

This invention relates to a wet type air cleaner utilizing a centrifugal impeller for fresh air, thus firstly airborne fine particulate dust, noxious gases and odor particles, pathogens, and the number of cleaning bacteria trapped using the water droplets in the scrubbing room, and secondarily the pollutant water is centrifugally separated from air on the basis of the difference between the specific gravity of gases and liquids (approximately1:1000) with using high-speed rotating centrifugal impeller with a powerful strength of the centrifugal force causes the vortex structure in the base to cleanse the air or gas, since scrubbing the pollution material including dust, harmful gaseous substances, virus and bacteria in air with the positive three dimensional vortex stream of water droplets, mist and fog on the basis of natural water instead of using solid filters with utilizing a depressing room on the outlet of a body.
This invention relates to a wet type air cleaner utilizing a centrifugal impeller for fresh air, thus the separation of pollution substances with scrubbing liquid can be absolutely eliminated from air with utilizing the difference of specific gravity (approximately 1:1000) between air and liquid by the strength of centrifugal force in the vortex generating structure such as centrifugal impeller, since scrubbing the pollution material including dust, harmful gaseous substances, virus and bacteria in air with the positive three dimensional vortex stream of fine water droplets, mist and fog on the basis of natural water instead of using solid filters with utilizing a depression room on the outlet of a body.

In this atmosphere, the air include bacteria, pathogens, sand and toxic gases, smoke, dust, oil, water, tire dust, pollen and a fine dust sizing smaller than 0,1µm, the smell particles are a mixture of pollutants.

The invention primarily airborne fine particulate dust, noxious gases and odor particles, pathogens, and bacteria by washing water collected in the wet air with lot of water droplets, and secondarily the wet air can be purged with high efficiency on the basis on the difference between the specific gravity of gases and liquids (1:1000), thus the pollution can be purify from the air with centrifugal separation based on the rotation speed of the centrifugal impeller for generating vortex flow and with the positive three dimensional vortex stream of fine water droplets, mist and fog on the basis of natural water instead of using solid filters.

The disadvantages of the conventional air cleaner are classified with the following type; a Solid Filter: low purification efficiency due to clogging of pollution dust, unsanitary germ culture, occurring in succession of junk pollution material, further a mechanical filter type typically used in solid form, but fully capture fine particulate dust and does not purify, and sometimes breeding out pathogens, or germs, especially in hospital, with periodic replacement of maintenance problems, and it has a problem with a non-woven fabric filter to generate secondary pollutants and environmental pollution, and it may be wasted lot of electric energy consumption with plugging, further it causes global warming.

More photo catalyst, electrostatic precipitation, plasma air purifying device have poor efficiency with a non-conductive, 1µm or less with a fine-particles, and electrostatic precipitation method or anion air purifier occurs side effects with harmful ozone for human health.

Conventional dry centrifugal type of air purifier in theory less than 85% of the air purification efficiency, it is impractical purification for the 5µm or less with a fine particulate dust, pollen, cigarette smoke, toxic gases trapping, and it is not suitable for demanding industrial clean rooms by centrifuging simply to remove for the less 0.3µm or less fine particles in the level of 99.9%.

On the other hand, the conventional wet type air purifiers; it purifies pollutants in the air flow to attract simply the two-dimensional surface area contact by the viscosity of water. Therefore, most pollutants do not contact the surface water film, thus purification efficiency is low as less than 20 percent level for the standard reference of 0.3 µm particles, and discharging excessive moisture emissions to outlets, it yields corrosion problem. further it is unable to remove 0,1µm or less particles including pathogens, microbial pathogens, hazardous gas. thus it is lack of ability to use industrial clean rooms, hospital facilities for the level of 99.9% air-purifying efficiency or the standard reference of 0.3 µm particles.

conventional humidifying air purifier or anion generating air purifier has good effect, but it has a problem with low air cleaning efficiency due to excessive moisture, since moisture-containing pollutants is accompanied with the exhaust air exit as in low air cleaning efficiency, thus contamination with even more moisture, so the emission has been known more harmful to human health.

Meanwhile, in the conventional way of indirect vortex flow, centrifugal air handling fans installed on the outside by the airflow supplied by the centrifugal method is indirect. Because the air supply from outside the centrifuge speed is very low, thus it had low air cleaning efficiency by 10% to 20% with discharging lot of the moisture and humidity, it had a low air cleaning efficiency due to excessive moisture occurs.

### Background Art

This present invention has been improved for centrifugal wet type cleaning air conditioner having a heat transfer, an air duct, a water circulator from a continuation in art of my Patent family from PCT International Publication Number WO 2006/112590 Al publicized on Oct. 26, 2006, CENTRIFUGAL WET TYPE AIR CLEANER UTILIZING A SPIN VAPORIZER AND A SPIRAL ON THE BASIS OF A LABYRINTH EFFECT on the basis of WO 2005/075799Al publicized on Aug. 18, 2005, WET TYPE PURIFICATION APPARATUS UTILIZING A CENTRIFUGAL IMPELLER and the ROK application laid-open No.10-2005-0099316, hereafter WO 2005/075799 was applied on the basis of the ROK application laid-open No.10-2004-0008187, 10-2004-0079691 and 10-2004-0080482 assigned by same applicant and inventor, YUN, Jangshik.

However, it has a problem with discharging out by carryover the washing water containing pollutants. Since it is occurred the pressure difference between inside and outside of the product. It was found that the flow of air to discharge with the water out of the centrifugal separation cylinder. The water containing the pollutants is discharged to the outside with the pollutants. Thus it has low air purification efficiency. In addition, it has a problem recycling water without filtering pollutants.

Therefore, in order to improve the problems of the present invention as the same applicant and the inventor of the prior art, it is solved by adding an annular cone-based depressed room functions, a water filter, and a water drainer. Thus it prevents the carry-over of washing water outside.
Further the washing water can recycle and drain efficiently by controlling centrifugal force of inertia and centrifugal force of a centrifugal impeller at the outlet of the centrifugal separation cylinder. Furthermore it is upgraded for air cleaning efficiency by making a high rotation speed of centrifugal impeller with the added devices.

In addition, it is upgraded for air cleaning efficiency from the prior art by adding an annular cone-based depressed room functions, a water filter, and a water drainer to recycle washing water completely. Therefore, it saves lot of electric energy. Thus it may be an environmental apparatus for preventing global warming by reducing CO2.

### Disclosure of Invention

### Technical Problem

The present invention, the conventional problems as described above is intended to improve the air cleaning efficiency for purifying pollutants including dust, bacteria, and dirty gas by separating centrifugally on the basis of specific gravity difference between air and water without a conventional solid filter. Thus it is upgraded for high-performance efficiency by adding an annular cone-based depressed room functions, a water filter, and a water drainer. Thus it prevents the carry-over of washing water outside.

To achieve these objectives the present invention, water-trapping pollutants in the air, and air and water by the difference between wet air gravity centrifugation to purify the air of a centrifugal type air cleaner in wet type, air intake body to (907) inhalant gas at (905), and the gas inhalant (905) came in to spray into the air cleaning unit number (907) is installed in the humidifying unit (903), and air pollution of water was sprayed As a three-dimensional trapping scrubbing room (902), and wet air attract and direct the fan's rotation generates centrifugal force to the body wet air (907) is installed in the centrifugal impeller (908), and the centrifugal impeller (908) of the is installed to keep the centrifugal force in the downstream wet air cyclone room(904), and was to be divided, and Centrifugal cleaning water to collect and wastewater treatment unit (907) installed in the interior of the ring of the water drainer (922), and water drainer (922) of the formed in the water due to internal pressure differential scattering (CARRY OVER) is installed to prevent water carry-over with a DEPRESSURIZED chamber 22C, with and water drainer (922) for storing washing water from the centrifugal cleaning by making Canteen (901), and clean canteen (901) from the inside of the water to cleanse and recycle water filter is installed (WATER FILTER, 14) that includes a centrifuge of the type wherein wet type air purifier is configured.

### Solution to Problem

Wet type air cleaner utilizing a centrifugal impeller is to eliminate the disadvantages mentioned above and to provide an advantage appliance with aqua viscosity of fine water droplets in the positive three dimensional vortex flow, neutralization reaction with harmful gaseous substances, centrifugal separating on the basis of different specific density, especially air: water 1:1,000, automatic sterilization without pasteurization chemicals according to this invention.
It is composed of atomizer for generating Fine water droplets (0.3.quadrature.) as in the vortex flow on the basis of positive 3 dimensional scrubbing with aqua viscosity cohesion gas-liquid centrifugal separator for preventing a high humidification problem with utilizing the different specific density (1:1,000, air: water), and liquid circulation pump for reusing liquid for a long time without frequently refilling. Wherein the sort of atomizer comprises aerodynamic venturing tube, ultra sonic vibration, air-water nozzle with blower or compressor.

### Advantageous Effects of Invention

Wet type air cleaner utilizing a centrifugal impeller with a liquid sprayer and gas-liquid centrifugal separator for cleaning gases, especially air is achieved for more than 99.9% air purification efficiency on the reference of less than 0,1µm with the aqua viscosity of fine water droplets in the vortex flow, neutralization reaction with harmful gaseous substances, centrifugal separating on the basis of different specific density without chemical addicts.

This apparatus is based on natural water, thus it is advantages of no more succession of junk pollution material such as an abolished solid filter.
As a result, it is applicable for fresh air in hospital facility including a baby room, an aseptic surgery, and a patient room, an automobile cabin, home appliances, office, and a school facility, and an industrial facility for semi conduct manufacturing, chemical process, clean room, aseptic laboratory, and military tools for chemical, biological and radiological (CBR) warfare including a personal soldier, a bunker, a tank et al.
The Gas-liquid centrifugal separator may be provided as an auxiliary part of a complex air cleaner or air condition system.

It is provided for Natural negative ions by water as a waterfall effect. In that way, harmful gas ozone (03) have no side effects occurred, such as electrostatic precipitation.

### Brief Description of Drawings

FIG. 1 is a perspective view for schematically showing a centrifugal wet type air cleaner according to the present invention;

FIG. 2 is an H-H cross sectional view for schematically showing the vortex-cylinder blades in FIG. 1;

FIG. 3 is an operational side view for air flow in FIG. 2;

FIG. 4 is a G-G cross sectional view for an annular water drain in FIG. 1;

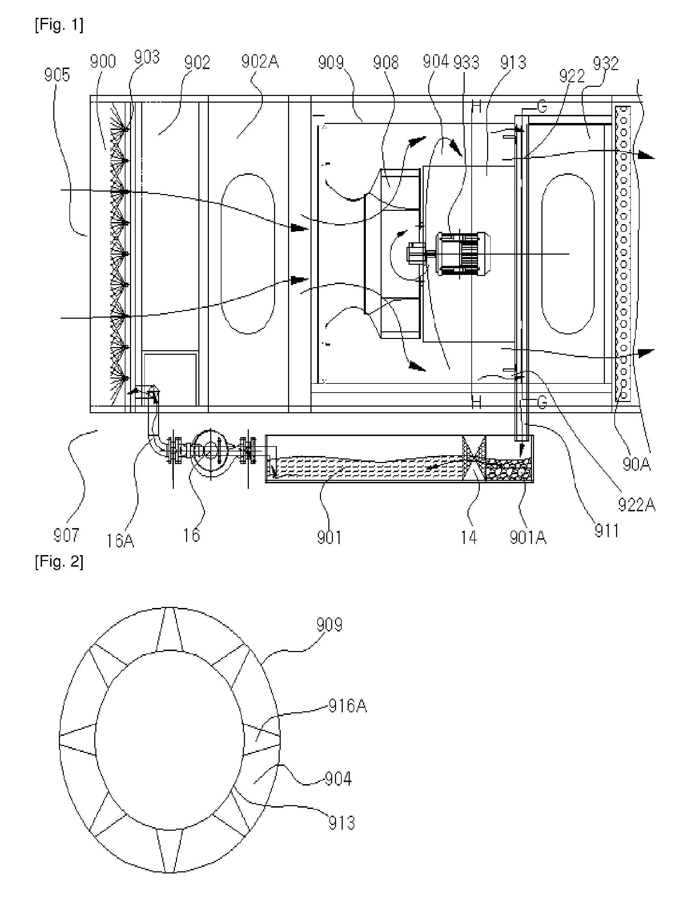

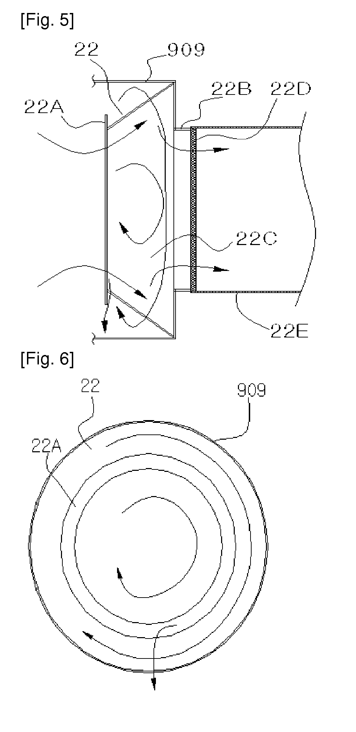

As shown in FIG. 5 is an G-G cross sectional view for a depressurize chamber in FIG. 1;

FIG. 6 is an operational front view for a conical duct in FIG. 5;

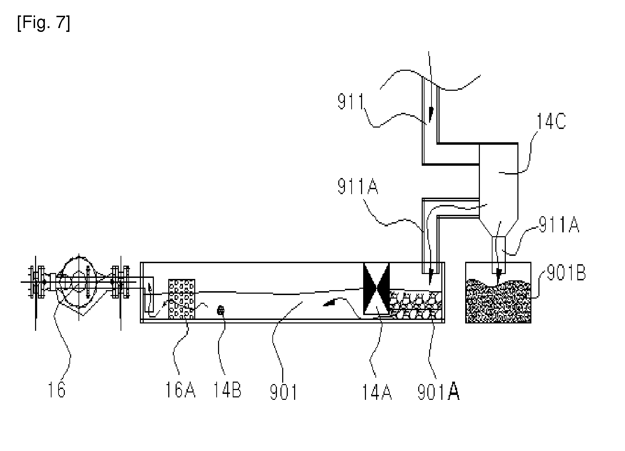

FIG. 7 is a layout view for schematically showing a water reservoir in FIG. 1;

### Best Mode for Carrying out the Invention

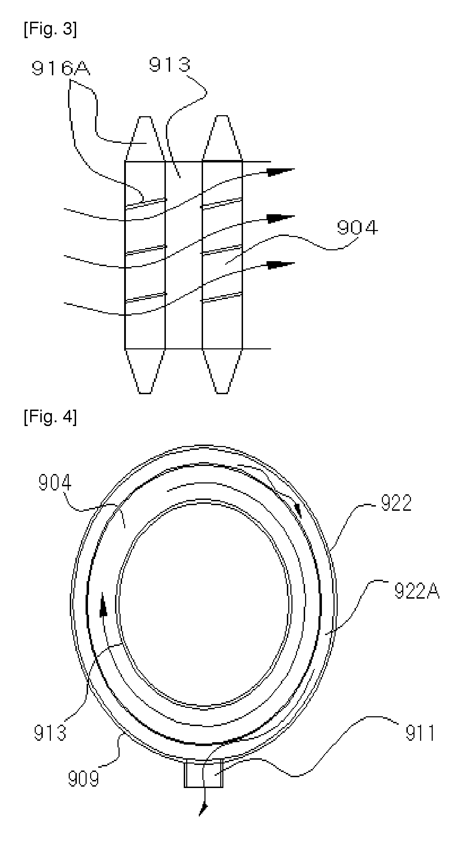

Best Mode for Carrying out the Invention Preferred embodiments of the present invention will be explained hereafter with reference to accompanied embodiments.
As shown in FIG. 1, A centrifugal wet type air cleaner for purifying contamination from air centrifugally by utilizing the direct rotation speed of a centrifugal impeller, the air cleaner comprising: An air cleaner housing having a vaporizer for vaporizing washing water to form a wet air mixture; A reservoir mounted to the housing for supplying the washing water, the reservoir located upstream of the centrifugal impeller; and An annular vortex room located downstream of the centrifugal impeller for generating a centrifugal force on the wet air mixture by utilizing the direct rotation speed, the annular vortex room defined between an inner wall of the body and a gas passage cylinder mounted within the housing; Wherein the air being purified when contamination in the air is collected by the washing water in the wet air mixture, the wet air mixture subsequently flowing through the vortex room so that the centrifugal force separates the contamination and washing water from the purified air because of the difference between the specific gravities of the air and the washing water;, and a depressurize chamber located downstream of the centrifugal impeller for preventing carry-over of the water, and a water filter mounted inside of the reservoir for recycling refresh washing water;,
As shown in FIG. 4, further comprising: a cone shaped annular water drain located downstream of the centrifugal impeller for collecting and draining water;,
As shown in FIG. 1, further comprising: the main body utilized as an air handling units, a gas dehumidifier, a humidifier, an anion generator, a vacuum cleaner and a car air conditioner, a constant temperature and humidity controller,
As shown in FIG. 1, further comprising: a vaporizer connected with a water tap through a water pipe;,
As shown in FIG. 1, further comprising: the vaporizer included a water pump, a centrifugal vaporizer, a nozzle sprayer, and a ultra sonic humidifier,
As shown in FIG. 7, further comprising: the water cooler mounted inside of the reservoir;, As shown in FIG. 7, further comprising: the oil water separator connected with the reservoir through a water pipe;,
As shown in FIG. 7, further comprising: the water filter utilized with carbon material;,
As shown in FIG. 7, further comprising: the sterilizer mounted inside of the reservoir;,
As shown in FIG. 1, further comprising: the main body manufactured perpendicular to the ground.

### Mode for the Invention

As shown in FIG. 1, A centrifugal wet type air cleaner is comprised for purifying contamination from air centrifugally by utilizing the direct rotation speed of a centrifugal impeller, the air cleaner comprising: An air cleaner housing having a vaporizer for vaporizing washing water to form a wet air mixture; A reservoir mounted to the housing for supplying the washing water, the reservoir located upstream of the centrifugal impeller; and An annular vortex room located downstream of the centrifugal impeller for generating a centrifugal force on the wet air mixture by utilizing the direct rotation speed, the annular vortex room defined between an inner wall of the body and a gas passage cylinder mounted within the housing; Wherein the air being purified when contamination in the air is collected by the washing water in the wet air mixture, the wet air mixture subsequently flowing through the vortex room so that the centrifugal force separates the contamination and washing water from the purified air because of the difference between the specific gravities of the air and the washing water;, and a depressurize chamber located downstream of the centrifugal impeller for preventing carry-over of the water, and a water filter mounted inside of the reservoir for recycling refresh washing water.

As shown in FIG. 1, A centrifugal wet type air cleaner is comprised of the body utilizing for the air handling units, gas dehumidifiers, humidifiers, anion generator, vacuum cleaners and car air conditioners, and an auxiliary parts in a dehumidifier of compressed air system, refrigerate air conditioner, constant temperature and humidity controller.

As shown in FIG. 1, A centrifugal wet type air cleaner is comprised of a cone shaped annular water drain located downstream of the centrifugal impeller for collecting and draining water.

As shown in FIG. 1, a centrifugal wet type air cleaner is comprised of a clean air outlet having a flow path substantially perpendicular to the centrifugal force.

As shown in FIG. 2 is a H-H cross sectional view for schematically showing the vortex-cylinder blades in FIG. 1 and FIG. 3 is an operational side view for air flow in FIG. 2, A centrifugal wet type air cleaner is comprised of vortex chamber 904 mounted inside of housing 909 and formed with a vortex cylinder 913 supported by multiple vortex cylinder blades 916A.

As shown in FIG. 4 is an G-G cross sectional view for an annular water drain in FIG. 1, A centrifugal wet type air cleaner is comprised of an annular water drain 922 located downstream of the centrifugal impeller 908 inside of a housing 909. Wherein an annular water drain path 922A is formed on an annular water drain 922 with a drain outlet 911.

As described above, according to the present invention is based on the configuration works in conjunction with the accompanying drawings illustrating a more detailed description of them is as follows.

As shown in Figure 1, a grill or screen usually called pre filter' is provided on the air inlet 905 for preventing large grain in air, and a water sprayer 903 is provided for generating fine mist of washing water. Therefore centrifugal impeller 908 is rotated with the power of electric motor 933 inside of a housing 909 for inducing air stream through an air inlet 905 communicated with a housing 909, and then liquid, especially water is atomized or sprayed by a water sprayer 903 from a liquid tank 901 as indicated by the arrows, thus scrubbing pollution substances in gas is scrubbed with the numerous atomizing liquid droplets as in the flow of fog or mist, wherein the pollution substances of gas are scrubbed efficiently with the viscosity of liquid mist or fine aqua droplets in the three-dimensional cubic vortex flow of fog or mist.

As shown in FIG. 2 is an H-H cross sectional view for schematically showing the vortex-cylinder support in FIG. 1, a vortex chamber 904 is formed between the inner cylinder 913 and the housing 909 for flowing vortex flow. A vortex blade (not shown) may be added for purifying severe pollution gas such as volatile organization compounds.

As shown in FIG. 3 is an operational side view for air flow in FIG. 2, the air is flowed centrifugally between the supporters 916A on the inner vortex cylinder 913 in the vortex chamber 904, and it is remained as in the state of vortex flow in the axial direction of a motor. Thus it is efficiently achieved for separating the contamination water from air for a long time inside of a housing 909.
As shown in FIG. 4 is an G-G cross sectional view for an annular water drain in FIG. 1, the liquid containing pollution substances is collected with gravity effect at an annular water drain 922 and is drained along an annular water path 922A through a drain outlet 911 in a vortex chamber 904 inside of a housing 913. meanwhile the clean gas, especially 'fresh air', is discharged at a clean gas outlet 432 without leaking air through a liquid drain trap 441 as shown in FIG. 1.

Hereafter, as shown in FIG. 1 is a perspective view for schematically showing a centrifugal wet type air cleaner according to the present invention, the contamination water is collected at a contamination reservoir 901A, and it is flowing at a fresh reservoir 901A by a water pump 16 through a water filter 14.

Therefore it is achieved for more than 99% air purification efficiency with the aqua viscosity of water droplets as a three dimensional scrubbing effect in stage 1 and with the centrifugal separation by direct rotation speed of a centrifugal impeller in stage 2, the basis of different specific gravity, especially air: water 1:1,000 approximately. Further a depressurize chamber is provided for preventing carry-over of water droplets by the difference of pressure between inside and outside of a main body in the present invention.

As shown in FIG. 1 is a perspective view for schematically showing a centrifugal wet type air cleaner according to the present invention, the washing water is supplied for a sprayer 903 by a water pump 16 through a supplying water pipe 16A. Wherein water pump 16 is utilized for sprayer 903 atomizing water.

As shown in FIG. 1 is a perspective view for schematically showing a centrifugal wet type air cleaner according to the present invention, it is achieved for air conditioning with a heat exchanger unit 90A. Wherein a heat exchanger unit 90A is located downstream of the centrifugal impeller 908 at the outlet 932 of a main body 907, thus it is achieved for controlling humidity and temperature in discharging air. Further it is utilized for Central Air Conditioning System without conventional apparatus, such as a compressor, a condenser and chemical coolant, thus it is environmental apparatus for saving energy, reducing CO2 gas and for preventing global warming.

As shown in FIG. 5 is an G-G cross sectional view for a depressurize chamber located downstream of a centrifugal impeller 908 in FIG. 1, a depressurize chamber 22C is located at the after body of a housing 909 for preventing carry-over of water at the gas outlet 932 and is formed inside of an annular conical duct 22 mounted inside of a housing 909. Further a depressurize chamber 22C may be added with a depressurize screen 22D to prevent for carry-over water at the gas outlet duct 22E. Wherein a depressurize screen 22D is able to flow air like a filter material. And an annular coffering 22A is formed around in front of a conical duct 22 for draining the contamination water.
Further the contamination water is collected efficiently by the centrifugal force and the inertial force in the vortex flow of gas generated with the direct rotation speed of centrifugal impeller 908 and is drained with the structure of an annular conical duct 22. Thus the contamination water is downwardly collected along an annular coffering 22A because water is heavier than the gas.
As described above, it is achieved for air washing purifying effect efficiency to prevent carryover accompanied by scattering water droplets to the outside due to the difference of pressure between inside and outside of a main body 907.
further it is achieved for better air clean efficiency with a depressurize chamber 22C to induce higher rotation speed of vortex flow on the speed of a centrifugal impeller. Wherein a depressurize chamber 22C is connected to gas outlet duct 22E with a duct coupler 22B. Furthermore a depressurize chamber 22C may be naturally formed in side of a gas outlet duct 22E.

As shown in FIG. 6 is an operational front view for a conical duct in FIG. 5, the contamination water is collected, as indicated by the arrows, around an annular coffering 22A on a conical duct 22 and downwardly flowed a contamination water reservoir 901A through a drain outlet.

As shown in FIG. 7 is an layout view for schematically showing a water reservoir in FIG. 1, a water cooler is composed for cooling water inside of a water reservoir 901, and a oil-water separator 14C is composed for separating chemical oil from the toxic gas, such as volatile organization compounds.
As described above, the volatile organization compounds, such as a thermal gas-phase solvent, toluene, benzene, organic solvents, is converted as a liquid-phase by the cool water, and the contamination liquid is centrifugally separated as the water and oil with an oil water separator 14C. Thus the contamination oil is downwardly flowed in an oil water separation reservoir 901B through an oil drain outlet 911A, meanwhile the contamination water is downwardly flowed in a contamination water reservoir 901A. Since a contamination water may be recycled after filtering with a water filter 14A.

Meanwhile, a water carbon filter 14A is utilized with carbon material for purifying volatile organization compounds, such as solvents.

Further a UV lamp 14B as an sterilizer is installed on a water reservoir 901 for sterilizing completely hospital germs, bacteria in standstill state for an enough time. thus it is supplied for fresh air.

Wherein a sprayer 903 is utilized with humidification devices such as a water pump, rotating atomization devices, nozzle atomization devices, and ultrasonic means.

Depending on the purpose of the present invention uses a pre-filter, a HEPA filter and a carbon filter can be used as a mechanical filter.

### Industrial Applicability

Wet type air cleaner utilizing a centrifugal impeller with a liquid sprayer and gas-liquid centrifugal separator for cleaning gases, especially air is achieved for more than 99 percentage air purification efficiency with the aqua viscosity of fine water droplets in the positive 3 dimensional vortex flow, neutralization reaction with harmful gaseous substances, centrifugal separating on the basis of different specific density, especially air to water 1 to 1000, automatic sterilization without chemical addicts.
As a result, it is applicable for fresh air in hospital facility including baby room, aseptic surgery, and patient room, automobile, home appliances, office, and school, and industrial facility for semi conduct manufacturing, chemical process, clean room, aseptic laboratory, and military tools for chemical, biological and radiological (CBR) warfare including a personal soldier, a bunker, a tank et al.
The Gas-liquid centrifugal separator may be provided for the auxiliary part of a complex air cleaner and air condition system.

Optional blank

## Claims

1. A centrifugal wet type air cleaner for purifying contamination from air centrifugally by utilizing the direct rotation speed of a centrifugal impeller, the air cleaner comprising: An air cleaner housing having a vaporizer for vaporizing washing water to form a wet air mixture; A reservoir mounted to the housing for supplying the washing water, the reservoir located upstream of the centrifugal impeller; and An annular vortex room located downstream of the centrifugal impeller for generating a centrifugal force on the wet air mixture by utilizing the direct rotation speed, the annular vortex room defined between an inner wall of the body and a gas passage cylinder mounted within the housing; Wherein the air being purified when contamination in the air is collected by the washing water in the wet air mixture, the wet air mixture subsequently flowing through the vortex room so that the centrifugal force separates the contamination and washing water from the purified air because of the difference between the specific gravities of the air and the washing water; and a depressurize chamber located downstream of the centrifugal impeller for preventing carry-over of the water, and a water filter mounted inside of the reservoir for recycling refresh washing water.

2. A centrifugal wet type air cleaner as claimed in claim 1, further comprising: a cone shaped annular water drain located downstream of the centrifugal impeller for collecting and draining water.

3. A centrifugal wet type air cleaner as claimed in claim 1, further comprising: the main body utilized as an air handling units, a gas dehumidifier, a humidifier, an anion generator, a vacuum cleaner and a car air conditioner, a constant temperature and humidity controller.

4. A centrifugal wet type air cleaner as claimed in claim 1, further comprising: the vaporizer connected with a water tap through a water pipe.

5. A centrifugal wet type air cleaner as claimed in claim 1, further comprising: the vaporizer included a water pump, a centrifugal vaporizer, a nozzle sprayer, and a ultra sonic humidifier.

6. A centrifugal wet type air cleaner as claimed in claim 1, further comprising: the water cooler mounted inside of the reservoir.

7. A centrifugal wet type air cleaner as claimed in claim 1, further comprising: the oil water separator connected with the reservoir through a water pipe.

8. A centrifugal wet type air cleaner as claimed in claim 1, further comprising: the water filter utilized with carbon material.

9. A centrifugal wet type air cleaner as claimed in claim 1, further comprising: the sterilizer mounted inside of the reservoir.

10. A centrifugal wet type air cleaner as claimed in claim 1, further comprising; the main body manufactured perpendicular to the ground.
